(19) Europäisches Patentamt
European Patent Office
Office européen des brevets

(11) **EP 4 213 068 A1**

(12) **EUROPEAN PATENT APPLICATION**
published in accordance with Art. 153(4) EPC

(43) Date of publication:
**19.07.2023 Bulletin 2023/29**

(51) International Patent Classification (IPC):
**G06K 9/00** (2022.01)

(21) Application number: **21866067.8**

(86) International application number:
**PCT/CN2021/117635**

(22) Date of filing: **10.09.2021**

(87) International publication number:
**WO 2022/053015 (17.03.2022 Gazette 2022/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.09.2020 CN 202010955213**

(71) Applicant: **Beijing Co Wheels Technology Co., Ltd
Beijing 101300 (CN)**

(72) Inventor: **DUAN, Xiong
Beijing 101300 (CN)**

(74) Representative: **Romano, Giuseppe et al
Società Italiana Brevetti S.p.A
Piazza di Pietra, 39
00186 Roma (IT)**

(54) **TARGET DETECTION METHOD AND APPARATUS BASED ON MONOCULAR IMAGE**

(57) A target detection method and apparatus based on a monocular image. The method comprises: obtaining the monocular image, and determining a two-dimensional frame of a target in the monocular image and a priori size of the target, the priori size being a preset size determined according to the target (S101); calculating space coordinates of two bottom corner points of the two-dimensional frame in a three-dimensional coordinate system (S102); and calculating three-dimensional information of the target according to the priori size of the target and the space coordinates of the two bottom corner points (S103).

```
┌─────────────────────────────────────────────────────┐
│  acquiring a monocular image , determining a type     │  S101
│  of a target in the monocular image and a two-        │
│  dimensional frame of the target in the monocular     │
│  image , and determining a prior size of the target   │
│  based on the type                                    │
└─────────────────────────────────────────────────────┘
                          │
                          ▼
┌─────────────────────────────────────────────────────┐
│  calculating spatial coordinates of two bottom        │  S102
│  corner points of the two-dimensional frame in a      │
│  three-dimensional coordinate system                  │
└─────────────────────────────────────────────────────┘
                          │
                          ▼
┌─────────────────────────────────────────────────────┐
│  calculating three-dimensional information of the     │  S103
│  target according to the priori size of the target    │
│  and the spatial coordinates of the two bottom        │
│  corner points                                        │
└─────────────────────────────────────────────────────┘
```

FIG. 1

EP 4 213 068 A1

**Description**

**CROSS-REFERENCE TO RELATED APPLICATION**

This application is based on and claims priority to Chinese Patent Application No. 202010955213.5, filed on September 11, 2020, the entire content of which is incorporated herein by reference.

**FIELD**

The present disclosure relates to the technical field of image processing, and in particular, to a target detection method and apparatus based on a monocular image.

**BACKGROUND**

In order to accurately formulate control strategies and control instructions according to road environment when the vehicle is driving automatically, in addition to providing distance information of targets (such as other vehicles, pedestrians, and obstacles, etc.) in a surrounding environment relative to the vehicle, it is also necessary to determine three-dimensional information of the targets in the surrounding environment.

At present, a method for determining the three-dimensional information of the target in a monocular image collected by a monocular camera is based on a deep learning model. The deep learning model requires a large number of samples for training. Each sample not only includes the image information of the target, but also needs to include corresponding size information label. The size information label of the target needs to be obtained by manual labeling. However, the cost of labeling a large number of samples with the size information label is very high.

In addition, the deep training model used in specific applications is directly related to a parameter of the monocular camera actually used. For training the deep learning model using each monocular camera, it is necessary to use this monocular graphics acquisition device to collect images to obtain image information of a target, and then label the image information of the target manually. That is, the model constructed by the deep learning method is not universal among vehicles with monocular cameras having different parameters.

**SUMMARY**

In order to solve the problem that the existing calculation method needs to collect a large number of size information labels and is costly, the present disclosure provides a new target detection method and apparatus based on a monocular image.

On the one hand, the present disclosure provides a target detection method based on a monocular image, including: acquiring the monocular image; determining a two-dimensional frame of a target in the monocular image and a priori size of the target, the priori size being a preset size determined according to the target; calculating spatial coordinates of two bottom corner points of the two-dimensional frame in a three-dimensional coordinate system; and calculating three-dimensional information of the target according to the priori size of the target and the spatial coordinates of the two bottom corner points.

Optionally, the three-dimensional information includes an estimated length and an estimated width; the priori size includes a priori length and a priori width; the spatial coordinates of the two bottom corner points in the three-dimensional coordinate system include length direction coordinates and width direction coordinates; calculating the three-dimensional information of the target according to the priori size of the target and the spatial coordinates of the two bottom corner points includes calculating the estimated length and the estimated width of the target according to the priori length and the priori width, and the length direction coordinates and the width direction coordinates of the two bottom corner points.

Optionally, calculating the estimated length and the estimated width of the target according to the priori length and the priori width, and the length direction coordinates and the width direction coordinates of the two bottom corner points includes: calculating a first scale coefficient according to the priori length, the priori width, the length direction coordinates and the width direction coordinates of the two bottom corner points in a case where the target is located in a side area in a width direction of the monocular image; and calculating the estimated length according to the first scale coefficient and the priori length, and calculating the estimated width according to the first scale coefficient and the priori width.

Optionally, calculating the first scale coefficient according to the priori length, the priori width, the length direction coordinates and the width direction coordinates of the two bottom corner points includes: calculating a reference size according to the length direction coordinates and the width direction coordinates of the two bottom corner points, the priori length and the priori width; and calculating a difference of the width direction coordinates of the two bottom corner points; and taking a ratio of the difference and the reference size as the first scale coefficient.

Optionally, calculating the reference size according to the length direction coordinates and the width direction coordinates of the two bottom corner points, the priori length and the priori width includes: calculating the reference size according to the length direction coordinates and the width direction coordinates of the two bottom corner points, the priori length, the priori width, and an external parameter of a monocular camera forming the monocular image; the external parameter including a yaw angle; the reference size being calculated by a formula:

$$Reference size = x \times sin |yaw| \times \frac{leftx}{lefty} + x \times cos |yaw| + y \times sin |yaw| + y \times cos |yaw| \times \frac{rightx}{righty},$$

where *Referencesize* represents the reference size, *x* represents the priori width, *y* represents the priori length, *yaw* represents the yaw angle, and *leftx* and *lefty* represent a length direction coordinate and a width direction coordinate of a bottom corner point on a left side, respectively; and *rightx* and *righty* represent a length direction coordinate and a width direction coordinate of a bottom corner point on a right side, respectively.

Optionally, calculating the estimated length and the estimated width of the target according to the priori size of the target and the length direction coordinates and the width direction coordinates of the two bottom corner points includes: taking a difference of the width direction of the two bottom corner points as the estimated width in a case where the target is located in a middle area in a width direction of the monocular image; taking the priori length as the estimated length; or taking a ratio of the estimated width and the priori width as a second scale coefficient; and calculating the estimated length according to the second scale coefficient and the priori length.

Optionally, the three-dimensional information further includes a projection area of the target on a reference plane; the reference plane is a plane determined by a length direction and a width direction of the three-dimensional coordinate system; and the method further includes: selecting a position reference point from the two bottom corner points; calculating length direction coordinates and width direction coordinates of four projection points of four sides of the target on the reference plane according to a length direction coordinate and a width direction coordinate of the position reference point, the estimated length and the estimated width; and determining the projection area of the target on the reference plane according to the length direction coordinates and the width direction coordinates of the four projection points.

Optionally, calculating the length direction coordinates and the width direction coordinates of the four projection points of the four sides of the target on the reference plane according to the length direction coordinate and the width direction coordinate of the position reference point, the estimated length and the estimated width of the target includes: calculating the length direction coordinates and the width direction coordinates of the four projection points according to the length direction coordinate and the width direction coordinate of the position reference point, the estimated length and the estimated width of the target, and an external parameter of a monocular camera forming the monocular image; the external parameter including at least one of a yaw angle, a pitch angle and a roll angle.

Optionally, the three-dimensional information further includes an estimated height, and the method further includes: taking a ratio of a width and a height of the two-dimensional frame as a third scale coefficient; and calculating the estimated height according to the third scale coefficient and the estimated width.

Optionally, the three-dimensional information further includes a spatial area range of the target in the three-dimensional coordinate system; and the method further includes: calculating height direction coordinates of the four projection points according to a height coordinate of the position reference point; determining a length direction coordinate, a width direction coordinate and a height direction coordinate of a vertex of the target according to the estimated height, and the length direction coordinates, the width direction coordinates and the height direction coordinates of the four projection points; and determining the spatial area range according to the length direction coordinate, the width direction coordinate, and the height direction coordinate of the vertex.

Optionally, the method further includes: displaying the spatial area range in the monocular image; and/or displaying the estimated length, the estimated width, and the estimated height in the monocular image.

On the other hand, the present disclosure provides a target detection apparatus based on a monocular image, which is configured to calculate three-dimensional information of a target in the monocular image. The apparatus includes: a target determining unit configured to determine a priori size of the target and a two-dimensional frame of the target in the monocular image, the priori size being a preset size determined according to the target; a corner point coordinate calculating unit configured to calculate spatial coordinates of two bottom corner points of the two-dimensional frame in a three-dimensional coordinate system; and a three-dimensional information calculating unit configured to calculate the three-dimensional information of the target according to the priori size of the target and the spatial coordinates of the two bottom corner points.

Optionally, the three-dimensional information includes an estimated length and an estimated width; the priori size includes a priori length and a priori width; the spatial coordinates of the two bottom corner points in the three-dimensional coordinate system include length direction coordinates and width direction coordinates; the three-dimensional information calculating unit includes: a scale coefficient calculating subunit configured to calculate a first scale coefficient according to the priori length, the priori width, the length direction coordinates and the width direction coordinates of the two bottom corner points in a case where the target is located in a side area in a width direction of the monocular image; and a size estimating unit configured to calculate the estimated length according to the first scale coefficient and the priori length, and calculate the estimated width according to the first scale coefficient and the priori width.

The target detection method and apparatus based on a monocular image provided in the present disclosure can be used to calculate the three-dimensional information of the target only by using the existing two-dimensional detection algorithm (existing detection algorithm and ranging algorithm) and the parameter of the monocular camera. Compared with the existing deep learning algorithm, the method provided in embodiments of the present disclosure does not need to provide the size information label corresponding to the target, thereby reducing the workload of model training in the early stage. In a calculation process, two deep learning algorithms with smaller computational complexity are needed, and the training complexity of a deep learning model is also reduced compared with the prior art.

## BRIEF DESCRIPTION OF THE DRAWINGS

The accompanying drawings herein, which are incorporated in and constitute a part of this specification, illustrate embodiments consistent with the present disclosure and, together with the description, serve to explain the principles of the present disclosure.

In order to more clearly illustrate embodiments of the present disclosure or the technical solutions in the prior art, the accompanying drawings that need to be used in the description of embodiments of the present disclosure or the prior art will be briefly introduced below. Apparently, other drawings can be obtained by those skilled in the art according to these accompanying drawings without any creative labor.

FIG. 1 is a flow chart showing a target detection method based on a monocular image provided in an embodiment.
FIG. 2 is a monocular image obtained by using a front-view monocular camera in a vehicle according to an embodiment.
FIG. 3 is a schematic flow chart showing calculation of an estimated length and an estimated width of a target.
FIG. 4 is a flow chart showing calculation of an estimated height provided in an embodiment of the present disclosure.
FIG. 5 is a flow chart showing calculation and determination of a projection area of a target according to an embodiment of the present disclosure.
FIG. 6 is a schematic diagram showing a target detection apparatus based on a monocular image provided in an embodiment.
FIG. 7 is a schematic diagram showing an electronic device provided in an embodiment of the present disclosure.

## DETAILED DESCRIPTION

In order to more clearly understand the above-mentioned objectives, features, and advantages of the present disclosure, solutions of the present disclosure will be further described below. It is to be noted that embodiments of the present disclosure and the features in the embodiments may be combined with each other without conflict.

Many specific details are described in the following description to facilitate a full understanding of the present disclosure, but the present disclosure can also be implemented in a manner different from those described herein. Apparently, the embodiments described in the specification are only a part, rather than all of the embodiments of the present disclosure.

Embodiments of the present disclosure provide a target detection method based on a monocular image, which is configured to calculate three-dimensional information of a target in the monocular image in a three-dimensional coordinate system. The specific three-dimensional information obtained by calculation is described in detail below.

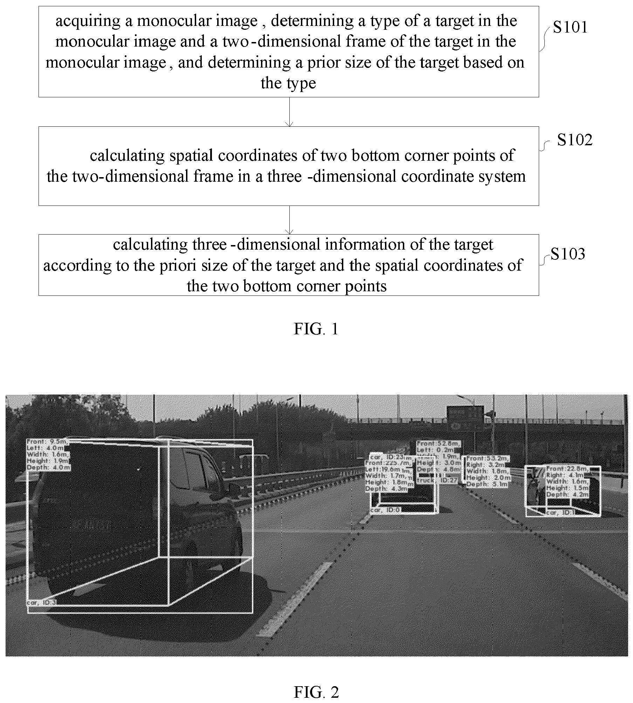

FIG. 1 is a flow chart showing a target detection method based on a monocular image provided in an embodiment. As shown in FIG. 1, the target detection method based on the monocular image provided in the embodiment includes steps S101 to S103.

In an embodiment of the present disclosure, a target is represented by sides parallel to three coordinate axes of a three-dimensional coordinate system, that is, the target is assumed as a cube.

In step S101, a monocular image is acquired, a two-dimensional frame of a target in the monocular image and a priori size of the target are determined.

In an embodiment, various detection algorithms can be used to process the monocular image and determine a type of the target in the monocular image and the two-dimensional frame in which the target is located. For example, *YOLO, SSD, FastRCNN,* or other deep learning algorithms with similar functions for processing two-dimensional images can be used to determine a type and a two-dimensional frame of an object. After the type of the target is determined, the priori size of the target can be determined by looking up corresponding table data.

A typical application scenario of embodiments of the present disclosure is a road scenario. The monocular image is an image captured by a monocular camera with a main body being a road environment and an environment on both sides of the road. The target in the monocular image is various object-like targets that may appear in the road, such as vehicles, pedestrians, and other obstacles in the road, etc.

In an embodiment of the present disclosure, a process of determining the priori size of the target may be as follows: a deep learning algorithm for processing a two-dimensional image is used to identify the image, to determine a target located on a lane in the image and a target located in an area which is at an edge of the lane and is associated with the travel of a vehicle, and determine a type of an object; and then to determine a priori size of this type of object by looking up a database of object types according to the type of the object. Whether there is an area associated with the travel of a vehicle on both sides of the lane may be determined according to a navigation map.

The priori size of the target may be preset according to the type of the target. In embodiments of the present disclosure, the priori size of the target may include a priori length and a priori width. For example, in a case where the target is a conventional family vehicle, the priori length is a typical length of the conventional family vehicle, and the priori width is a typical width of the conventional family vehicle.

In the following, for the convenience of expression, the priori length in a formula is represented by *clength,* and the priori width is represented by *cwidth.*

The two-dimensional frame of the target in the monocular image is a smallest rectangular frame that contains the majority of pixels representing the target. It should be noted that pixels that do not represent features of the target may also be included in the two-dimensional frame.

When the two-dimensional frame where the target is located is determined, coordinates of the image pixels constituting the two-dimensional frame in the monocular image are determined, and thus attributes of the two-dimensional frame in the monocular image are determined.

The attributes of the two-dimensional frame include a position of the two-dimensional frame in the image and a size of the two-dimensional frame. In embodiments of the present disclosure, the position of the two-dimensional frame in the image and the size of the two-dimensional frame may be determined by using coordinates of four corner points of the two-dimensional frame.

For example, if an upper left corner of the monocular image is taken as a coordinate origin, a coordinate of the upper left corner point of the two-dimensional frame in the monocular image is *(a, b),* a width of the two-dimensional frame is *c,* a height of the two-dimensional frame is *d,* and each side of the two-dimensional frame is parallel to a coordinate axis of a coordinate system of the monocular camera, then a coordinate of an upper right corner point is *(a+c, b),* a coordinate of a lower left corner point is *(a, b+d),* and a coordinate of a lower right corner point is *(a+w, b+d).* The two-dimensional frame can be determined by connecting the four corner points in sequence.

FIG. 2 shows a monocular image obtained by using a front-view monocular camera in a vehicle according to an embodiment (since FIG. 2 has been subjected to post-processing, three-dimensional information of targets which will be mentioned later is displayed therein; for the convenience of understanding, this information may be omitted herein and will be focused on in the subsequent description).

As shown in FIG. 2, a target in a left area of FIG. 2 is a small multi-purpose vehicle *(MPV),* a two-dimensional frame (a rectangular frame located on the outside of a cube) that roughly includes the MPV is determined through the processing of the step S101.

In step S102, spatial coordinates of two bottom corner points of the two-dimensional frame in a three-dimensional coordinate system are calculated.

In an embodiment of the present disclosure, an existing ranging algorithm for a two-dimensional image *(pixel2distance (m, n),* where *m* and *n* are coordinates of a corresponding pixel in the two-dimensional image, respectively) can be used to determine the spatial coordinates of the two bottom corner points in the three-dimensional coordinate system. For example, the ranging algorithm may be a manifold learning ranging algorithm.

The spatial coordinates of the two bottom corner points in the three-dimensional coordinate system include length direction coordinates, width direction coordinates, and height direction coordinates.

In the following, for the convenience of expression, in the three-dimensional coordinate system, a length direction coordinate is represented by *y,* a width direction coordinate is represented by *x,* and a height direction coordinate is represented by *z.* Correspondingly, a length direction coordinate of a certain spatial point is *pointID_y,* a width direction coordinate of the certain spatial point is *point_x,* a height direction coordinate of the certain spatial point is *pointID_z,* and *pointID* is an identifier of the certain spatial point.

Taking FIG. 2 as an example, a bottom corner point *left_corner* on a left side in the monocular image of FIG. 2 corresponds to a point *left_bottom* in the spatial coordinate system, and a bottom corner point *right_corner* on a right side correspond to a point *right_bottom* in the spatial coordinate system. The coordinates of the two bottom corner points in the three-dimensional coordinate system determined by the ranging algorithm are:

$$left\_bottom\_x, left\_bottom\_y, left\_bottom\_z=pixel2distance(a,b+d);$$

$$right\_bottom\_x, right\_bottom\_y, right\_bottom\_z=pixel2distance(a+c,b+d).$$

In some applications of embodiments of the present disclosure, the application scenarios are mostly primary and secondary paved roads such as urban trunk roads and expressways. Such roads have features that the road surface is flat, the gradient fluctuation is small, and the gradient is relatively consistent over a long distance, and a near target captured by the monocular camera (for example, within the range of 200 m) is basically on a same plane as the vehicle, so the *left_bottom_z* and the *right_bottom_z* can be directly set to 0 in actual processing.

In other applications of embodiments of the present disclosure, actual values of the *left_bottom_z* and the *right_bottom_z* may also be determined according to available data such as actual road conditions, road undulation data, and the like. For example, in some applications, a road undulation condition can be determined according to an extension condition of a lane line in the monocular image, and can be used as reference data to determine the three-dimensional coordinates of the two bottom corner points.

In practical applications, a coordinate origin of the selected three-dimensional coordinate system has an influence on the calculation of the spatial coordinates of the two bottom corner points.

In the case where the three-dimensional coordinate system is a monocular camera coordinate system, the length direction is an optical axis direction of the monocular camera, the height direction is a vertical shooting direction of the monocular camera, and the width direction is a direction perpendicular to the optical axis and the height direction of the monocular camera. At this time, the spatial coordinates of the two bottom corner points can be calculated only according to an internal parameter of the monocular camera. The internal parameter includes a focal length and an offset of the optical axis in the three-dimensional coordinate system.

In the case where the three-dimensional coordinate system is a vehicle coordinate system, the length direction is a direction determined by a length of the vehicle, the width direction is a width direction of the vehicle, and the height direction is a height direction of the vehicle. At this time, after the coordinates of the two bottom corner points in the monocular camera spatial coordinate system are determined according to the internal parameter of the monocular camera, it is also necessary to determine the spatial coordinates of the two bottom corner points in the vehicle coordinate system through coordinate transformation. At this time, the internal parameter is the same as the aforementioned internal parameter, and an external parameter includes an attitude parameter of the vehicle and a coordinate conversion parameter. The attitude parameter includes at least one of a pitch angle, a yaw angle and a roll angle. The coordinate conversion parameter is a parameter converted from the monocular camera coordinate system to the vehicle coordinate system. In the actual calculation process, it is necessary to determine whether to use a certain external parameter according to an attitude state of the vehicle.

In step S103, three-dimensional information of the target is calculated according to the priori size of the target and the spatial coordinates of the two bottom corner points.

Depending on the three-dimensional information of the target to be calculated, the corresponding calculation steps are different.

In an embodiment of the present disclosure, the three-dimensional information may include size features of the target itself. For example, in some applications, the three-dimensional information may include an estimated length and an estimated width of the target. In the following, for the convenience of expression, the estimated length in a formula is represented by *obj_length,* and the estimated width is represented by *obj_width.*

Correspondingly, the step S103 specifically includes calculating the estimated length and the estimated width of the target according to the priori length and priori width, and the length direction coordinates and the width direction coordinates of the two bottom corner points.

In practical applications, methods for calculating the estimated length and the estimated width of the target vary depending on a position of the target relative to the monocular camera forming the monocular image, that is, depending on a position of the target in the width direction of the monocular image.

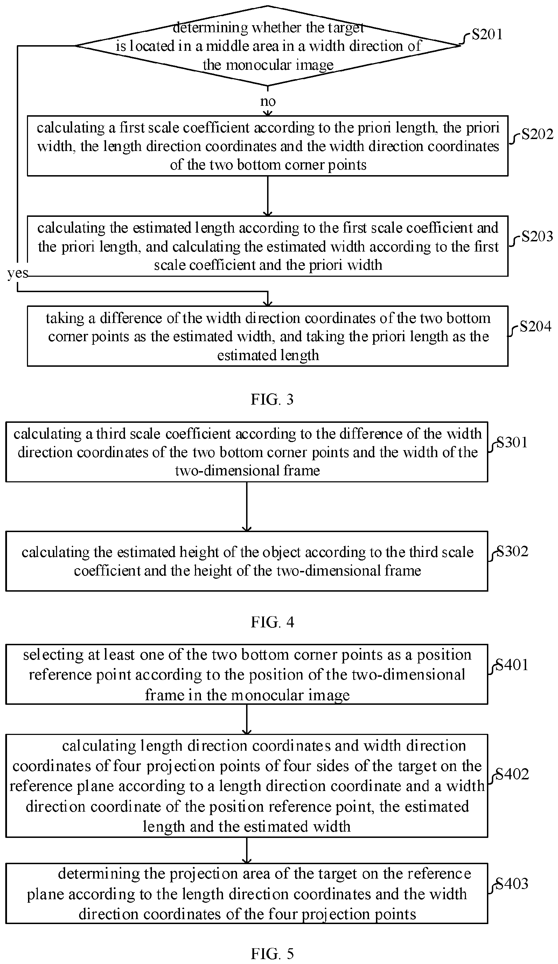

FIG. 3 is a schematic flow chart showing calculation of an estimated length and an estimated width of a target. As shown in FIG. 3, in embodiments of the present disclosure, the step of calculating the estimated length and the estimated width of the target includes steps S201 to S205.

In step S201, whether the target is located in a middle area in a width direction of the monocular image is determined; if no, performing steps S202 to S204; if yes, performing step S205.

In embodiments of the present disclosure, the middle area in the width direction of the monocular image is an area that is formed by expanding a set number of pixels to left and right sides from a middle separation line in the width direction of the monocular image as a center line. The aforementioned set number of pixels may be set according to actual application needs. In specific applications, the number of pixels corresponding to the middle area may be different at different positions in the height direction of the monocular image. For example, the closer an area to the bottom of the monocular image, the greater the number of pixels corresponding to the middle area, while the closer an area to the top of the monocular image, the less the number of pixels corresponding to the middle area.

In the monocular image, besides the aforementioned preset middle area, areas on left and right sides of the middle area (that is, areas on left and right sides of the monocular image in the width direction) are side areas.

Referring to images of the *MPV* in the left area, a small car in the middle area, and a small car in the right area shown in FIG. 2, it can be seen that if the target is directly in front of the monocular camera (that is, the middle area of the monocular image), only its rear can be seen, and its sides cannot be seen. If an object is not directly in front of the monocular camera but on a left front side or a right front side of the monocular camera (that is, areas on both sides in the width direction of the monocular image), the rear and one side of the object can be seen. In the two cases, a calculation method of the estimated size is not the same. Correspondingly, different implementation steps are required.

In step S202, a first scale coefficient is calculated according to the priori length, the priori width, the length direction coordinates and the width direction coordinates of the two bottom corner points.

If the target is not in the middle area of the monocular image, one length side of the target can be seen, and the length direction coordinates and the width direction coordinates of the two bottom corner points need to be used to determine the estimated length and the estimated width of the target.

Specifically, in the implementation of the step S202, steps S2021 and S2022 may be included.

In step S2021, a reference size is calculated according to the length direction coordinates and the width direction coordinates of the two bottom corner points, the priori length and the priori width.

In embodiments of the present disclosure, the reference size is a hypothetical reference provided for calculating the estimated length and the estimated width of the target.

The reference size is obtained by the following method: supposing that a reference object with a priori size is placed in a spatial coordinate system where a real target is located, and its position is the same as that of the real target, then at this time, a virtual size (for example, a virtual size projected in the width direction of the three-dimensional coordinate system) can be determined according to its priori size, and the virtual size is the reference size.

In the specific application of the embodiment shown in FIG. 2, since the estimated length and the estimated width are sizes in the length direction and the width direction in the three-dimensional coordinate system, and independent of a size in the height direction, and the reference size is actually a width size, so the reference size is actually a visible width size. In the following formula, the reference size is represented by *view_width*.

In some applications of embodiments of the present disclosure, if the size is calculated in the case where the vehicle travels in the road direction (without considering an external parameter such as a yaw angle), then

$$view\_width = cwidth \times left\_bottom\_x / left\_bottom\_y +$$
$$cwidth + cdepth + clength \times right\_bottom\_x / right\_bottom\_y.$$

That is, without considering the external parameter, the reference size can be determined by directly using the length direction coordinates and the width direction coordinates of the two bottom corner points, as well as the priori length and the priori width.

In other applications of embodiments of the present disclosure, the calculation of the reference size needs to consider the external parameter (i.e., an actual driving state of the vehicle) of the monocular camera forming the monocular image, in addition to the length direction coordinates and the width direction coordinates of the two bottom corner points, the priori length, and the priori width.

The external parameter includes at least one of the yaw angle, the pitch angle, and the roll angle. In the following formula, the yaw angle is represented by *yaw,* the pitch angle is represented by *pitch,* and the roll angle is represented by *roll.*

Taking the typical scenario in FIG. 2 as an example where the vehicle is driving on a horizontal plane, its pitch angle and roll angle are both 0, and only the yaw angle affects the calculation of the reference size, so only the yaw angle is used for the calculation. Specifically, the reference size is calculated by the following formula:

$$view\_width = cwidth \times \sin|yaw| \times left\_bottom\_x / left\_bottom\_y + cwidth \times \cos|yaw| + cdept \times \sin|yaw|$$
$$+ clength \times \cos|yaw| \times right\_bottom\_x / right\_bottom\_y.$$

In addition, in the scenario of FIG. 2, the target (such as the small *MPV* in FIG. 2) may have a certain yaw angle relative to the lane line, and the yaw angle of the target also affects the calculation of the reference size. In practical applications, it is also possible to determine an absolute yaw angle (that is, an absolute deviation between the yaw angle of the vehicle and the yaw angle of the target) according to the yaw angle of the target (the yaw angle relative to the road) and the yaw angle of the vehicle (the yaw angle relative to the road), and then bring the absolute yaw angle into the above formula to calculate the reference size.

In step S2022, a first scale coefficient is calculated according to a difference of the width direction of the two bottom corner points and the reference size.

The reference size is used as a hypothetical reference for calculating the estimated length and the estimated width of an object. In the step S2022, the reference size is used as the hypothetical reference, and a ratio of the estimated size of the object to the priori size is calculated.

In step S202, the first scale coefficient is the ratio of the estimated size and the priori size of the object. In the following formula, the first scale coefficient is represented by *ratio.* The first scale coefficient may be:

$$ratio=(right\_bottom\_x-left\_bottom\_x)/view\_width,$$

*or*

$$ratio=view\_width/(right\_bottom\_x-left\_bottom\_x).$$

After the execution of the step S202 is completed, step S203 is executed.

In step S203, the estimated length is calculated according to the first scale coefficient and the priori length, and the estimated width is calculated according to the first scale coefficient and the priori width.

The step S203 is to determine the estimated length and the estimated width of the object according to the priori size in the case where the ratio of the estimated size and the priori size of the object is determined.

For the *MPV* in FIG. 2, depending on different calculation methods of the first scale coefficient, the estimated length is obtained by using *obj_width=cwidhth×ratio or obj_width_cwidhth/ratio.* and the estimated width is obtained by using *obj_length=clength×ratio or obj_length=clength/ratio.*

In step S204, a difference of the width direction of the two bottom corner points is taken as the estimated width, and the priori length is taken as the estimated length.

According to the step 201, it can be determined that the object is located in the middle area of the monocular image in combination with the two-dimensional frame displayed by the object in the middle area of FIG. 2 (the object is a vehicle), and in the actual scenario, the object is located directly in front of the monocular camera, so the length side of the object cannot be captured.

As can be seen from FIG. 2, the difference of the width direction coordinates of the two bottom corner points is roughly equal to the width of the target, so the difference of the width direction coordinates of the bottom corner points can be directly used as the estimated width.

If the target is located directly in front of the monocular camera, the length side of the target cannot be captured, and there is no basis to reasonably estimate the length of the target, so the priori length is directly used as the estimated width in step S205.

In other embodiments of the present disclosure, the estimated width may be determined by using other methods. For example, the difference of the width direction coordinates of the two bottom corner points may be calculated, the difference is compared with the priori width to obtain a second scale coefficient, and then the estimated length is calculated according to the second scale coefficient and the priori length.

Using the aforementioned steps S201 to S205, the estimated length and the estimated width of the target are determined. The estimated length and the estimated width can then be used to determine the position of the target in the three-dimensional coordinate system.

In some applications of embodiments of the present disclosure, the three-dimensional information of the object may further include an estimated height in addition to the aforementioned estimated length and the estimated width.

FIG. 4 is a flow chart showing calculation of an estimated height provided in an embodiment of the present disclosure. As shown in FIG. 4, the calculation method of the estimated height includes steps S301 to S302.

In step S301, a third scale coefficient is calculated according to the difference of the width direction coordinates of the two bottom corner points and the width of the two-dimensional frame.

Please still take the *MPV* on the left side of FIG. 2 as an example for spatial imagination, it can be obtained that the ratio of the difference of the width direction coordinates of the two bottom corner points to the width of the two-dimensional frame is the same as the ratio of the actual height of the *MPV* (roughly the same as the estimated height) to the height of the two-dimensional frame, both of which are the third scale coefficient. The third scale coefficient can be calculated by using the width of the two-dimensional frame and the difference of the width direction coordinates of the two bottom corner points, so the estimated height can be calculated by using the width of the two-dimensional frame and the difference of the width direction coordinates of the two bottom corner points. In the following, the third scale coefficient is represented by *back_ratio.*

$$back\_ratio=(right\_bottom\_x-left\_bottom\_x)/w,$$

or

$$back\_ratio=w/(right\_bottom\_x-left\_bottom\_x).$$

In step S302, the estimated height of the object is calculated according to the third scale coefficient and the height of the two-dimensional frame.

According to the analysis in step S301, the estimated height of the target can be calculated according to the height *d* of the two-dimensional frame. In the following, the estimated height in the formula is represented by *obj_height.* According to different calculation methods of the third scale coefficient, *obj_height=d×back_ratio, or obj_height=d/back_ratio.*

In practical applications, there is a need to determine other three-dimensional information of the target, in addition to a need to determine the three-dimensional size of the object. For example, there is a need to determine a projected area of the target in a reference plane determined by the length direction and the width direction.

In the scenario shown in FIG. 2, the reference plane determined by the length direction and the width direction is the ground, and the corresponding aforementioned need is to determine the projection area of the object on the ground. To meet the application needs of the preceding paragraph, embodiments of the present disclosure further provide a step of calculating the projection area.

FIG. 5 is a flow chart showing calculation and determination of a projection area of a target according to an embodiment of the present disclosure. As shown in FIG. 5, the step of determining the projection area of the target includes steps S401 to S403.

In step S401, at least one of the two bottom corner points is selected as a position reference point according to a position of the two-dimensional frame in the monocular image.

In step S401, it is necessary to determine which bottom corner point is selected as the position reference point according to the position of the two-dimensional frame in the monocular image. The position reference point is a point of the two bottom corner points closer to the vehicle.

Taking the small *MPV* in the left area of FIG. 2 as an example, since its corresponding two-dimensional frame is on the left side of the monocular image, it can be seen that the *left_bottom* is relatively closer to the object, so this point is selected as the position reference point.

Similarly, taking the vehicle in the right area of FIG. 2 as an example, since its corresponding two-dimensional frame is on the right side of the monocular image, it can be seen that the *right_bottom* is relatively closer to the object, so this point is selected as the position reference point.

If the target is in the middle of the two-dimensional frame, any point of the two bottom corner points can be selected as the position reference point, or both bottom corner points are selected as the position reference points.

In step S402, length direction coordinates and width direction coordinates of four projection points of four sides of the target on the reference plane are calculated according to a length direction coordinate and a width direction coordinate of the position reference point, the estimated length and the estimated width.

In embodiments of the present disclosure, the four sides extend along the height direction of the three-dimensional coordinate system, and represent the sides of four corners of the target. As mentioned above, the target in embodiments of the present disclosure is assumed to be a cube, and its projection area on the reference plane is a rectangle, so a range of the projection area can be determined by determining four vertices of the rectangular projection. The length direction coordinates and the width direction coordinates of the four vertices of the rectangle are the length direction coordinates and the width direction coordinates of projection points of the four sides of the cube on the reference plane.

In the following, the four projection points are represented by *back_left, back_right, head_left,* and *head_right,* respectively.

In embodiments of the present disclosure, taking the small *MPV* on the left side of FIG. 2 as an example, the calculation of the length direction coordinates and the width direction coordinates of the four projection points is explained.

In specific applications, if the vehicle drives along the road, and the monocular camera captures monocular images in the case where the yaw angle is 0, the length direction coordinates and the width direction coordinates of the four sides can be determined as follows.

$$back\_left\_x=left\_bottom\_x; \ back\_left\_y=left\_bottom\_y;$$

$$back\_right\_x=right\_bottom\_x; \ back\_right\_y=right\_bottom\_y;$$

$$head\_left\_x=back\_left\_x; \ head\_left\_y=left\_bottom\_y+obj\_length;$$

$$head\_right\_x=back\_right\_x;$$

$$head\_right\_y=right\_bottom\_y+obj\_length.$$

In other embodiments of the present disclosure, the coordinates of the four sides are not only related to the coordinate of the position reference point, the estimated length, and the estimated width, but also related to an external parameter of the monocular camera (that is, the driving state of the vehicle). According to specific conditions, the external parameter includes at least one of the yaw angle, the pitch angle, and the roll angle.

In the scenario as shown in FIG. 2, the external parameter is the yaw angle, and calculation formulas of a corresponding left rear projection point are as follows.

$$back\_left\_x=left\_bottom\_x+obj\_width\times sin(yaw)\times left\_bottom\_x/left\_bottom\_y;$$

$$back\_left\_y=left\_bottom\_y+obj\_width\times sin(yaw).$$

After the coordinates of the left rear projection point are determined, coordinates of the other three projection points can be determined further according to the estimated length and the estimated width. The calculation formulas of the coordinates of the other three projection points are as follows.

$$back\_right\_x=back\_left\_x+obj\_width\times cos(yaw);$$

$$back\_right\_y=left\_bottom\_y;$$

$$head\_left\_x=back\_left\_x+obj\_depth\times sin(yaw);$$

$$head\_left\_y=back\_left\_y+obj\_depth\times cos(yaw);$$

$$head\_right\_x=back\_right\_x+obj\_depth\times sin(yaw);$$

$$head\_right\_y=back\_right\_y+obj\_depth\times cos(yaw).$$

In embodiments of the present disclosure, for the target in the middle area of the monocular image, in addition to using the aforementioned method to determine the length direction coordinates and width direction coordinates of the four sides, in the case where both of the two bottom corner points are determined as the position reference points, the length direction coordinates and the width direction coordinates can also be determined by the following method: (1) the length direction coordinate and the width direction coordinate of the bottom corner point on a left side are directly taken as a length direction coordinate and a width direction coordinate of the left rear side; (2) the length direction coordinate and the width direction coordinate of the bottom corner point on a right side are directly taken as a length direction coordinate and a width direction coordinate of the right rear side; (3) coordinates of the left front side and coordinates of the right front side are calculated according to the coordinates of the left rear side and the right rear side, and the estimated length.

In step S403, the projection area of the target on the reference plane is determined according to the length direction coordinates and the width direction coordinates of the four projection points.

In step S403, the projection area is formed and determined by connecting adjacent projection points after the length direction coordinates and the width direction coordinates of the projection points of the four sides on the reference plane are determined.

In practical applications, in the scenario as shown in FIG. 2, a distance between the target and the vehicle, and the area of the target in the reference plane can be determined according to steps S401 to S403, which provides a basis for the vehicle to plan a driving route and subsequent operations.

Further, in some applications of embodiments of the present disclosure, there may also be a need for determining a spatial area range of the target, in addition to a need for determining the projection of the target in the length direction and the width direction.

According to the aforementioned description, the target is assumed to be a cube, so determining the spatial area range of the target can be simplified as determining eight vertices of the cube, and using the eight vertices to delineate the spatial area range. Specifically, the step of determining the spatial area range includes steps S501 to S502.

In step S501, height direction coordinates of the four projection points are calculated according to the height direction coordinate of the position reference point.

Among the eight vertices of the spatial area, four vertices are the aforementioned four projection points. Currently, the length direction coordinates and the width direction coordinates of the four projection points are known, and only the height direction coordinates are unknown. Therefore, the height direction coordinates of the four projection points need to be determined.

In embodiments of the present disclosure, since the position reference point is also in the projection reference plane, the height direction coordinate of the position reference point can be directly used as the height direction coordinates of the four projection points.

In step S502, length direction coordinates, width direction coordinates and height direction coordinates of vertices of the target are determined according to the estimated height, and the length direction coordinates and the width direction coordinates of the four projection points.

As mentioned above, the coordinates of the four projection points are known, that is, the coordinates of the four vertices at the bottom of the target are known. What need to be determined are the coordinates of four vertices at the top of the target. The height direction coordinates of the four vertices at the top of the target can be directly obtained by adding the estimated height and the height direction coordinates of the projection points. The length direction coordinates and the width direction coordinates of the four vertices can directly use the length direction coordinates and the width direction coordinates of the four projection points.

In step S503, a spatial area range of the target in the three-dimensional coordinate system is determined according to the coordinates of the vertices in the three-dimensional coordinate system.

The step S503 is to determine a coordinate range of six sides of the target in the three-dimensional coordinate system according to the coordinates of the eight vertices determined, and a spatial relationship between the vertices and the sides of the cube, and determine a closed area formed by the six sides as the spatial area range of the target in the three-dimensional coordinate system.

In the application as shown in FIG. 2, the vertices at the bottom are represented by *down_back_left, down_back_right, down_head_left,* and *down_head_left,* respectively, and the vertices at the top are represented by *top_back_left, top_back_right, top_head_left,* and *top_head_right*, respectively.

Then, the three-dimensional coordinates of individual vertices can be determined as:

*down_back_left_x=back_left_x; down_back_left_y=back_left_y;*
*down_back_left_z=0; down back right_x=back_right_x;*
*down_back_right_y=back_right_y; down_back_right z=0;*
*down_head_left_x=head_left_x; down head_left_y=head_left_y;*
*down_head_left_z=0; down_head right_x=head_right_x;*
*down_head_right_y=head_right_y; down_head_right_z=0;*
*top_back_left_x=back_left_x; top_back_left_y=back_left_y;*
*top_back_left_z=obj_height; top_back_right_x=back_right_x;*
*top_back_right_y=back_right_y; top_back_right_z=obj_height;*
*top_head_left_x=head_left_x; top_head_left_y=head_left_y;*
*top_head_left_z=obj_height; top_head_right_x=head_right_x;*
*top_head_right_y=head_right_y; top_head_right_z=obj_height.*

In practical applications, the determined spatial area range may also be identified in the monocular image. Specifically, inverse transformation corresponding to the ranging algorithm is used to determine a corresponding area of the spatial area range in the monocular image.

In a specific application, corresponding corner points of the vertices in the monocular image can be determined according to the three-dimensional coordinates of the vertices of the target, and then the corresponding corner points are connected to represent individual sides of the target, thereby identifying the range of the target. As shown in FIG. 2, the range of the small *MPV* on the left side is represented by sides of a cube with a perspective effect.

In addition, in specific applications, the coordinates of the target in the three-dimensional coordinate system, as well as the estimated length, the estimated height and the estimated height of the target may also be displayed in the monocular image. The coordinates of the target in the three-dimensional coordinate system may be represented by the coordinates of a point of the target closest to the coordinate origin of the three-dimensional coordinate system.

Based on the aforementioned analysis, it can be seen that the target detection algorithm based on the monocular image provided in embodiment of the present disclosure can be used to calculate the three-dimensional information of the target by only using the existing 2D detection algorithm (the existing detection algorithm and the ranging algorithm) and the parameter of the monocular camera. Compared with the existing deep learning algorithm, the method provided in embodiments of the present disclosure does not need to provide the size information label corresponding to the object, thus reducing the workload of early model training.

In addition, the method of embodiments of the present disclosure only needs two deep learning algorithms with small computational complexity, and the complexity of training the deep learning model is also reduced as compared with that of training the deep learning model in the prior art.

In addition to the target detection method based on a monocular image, embodiments of the present disclosure also provide a target detection apparatus based on a monocular image, which adopts the same inventive concept as the aforementioned method. The following will introduce the architecture of the apparatus for calculating the three-dimensional information of the target based on the monocular image. The functions of individual component modules and the effect of the entire apparatus can be referred to the aforementioned description.

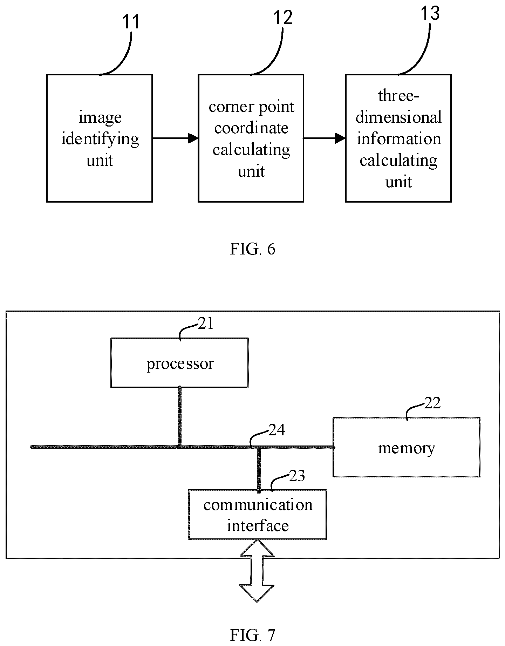

FIG. 6 is a schematic diagram showing a target detection apparatus based on a monocular image provided in an embodiment. As shown in FIG. 6, the apparatus provided in embodiments of the present disclosure includes an image identifying unit 11, a corner point coordinate calculating unit 12, and a three-dimensional information calculating unit 13.

The target determining unit is configured to acquire the monocular image, determine a type of the target in the monocular image, a two-dimensional frame of the target in the monocular image, and determine a priori size of the target based on the type.

The corner point coordinate calculating unit 12 is configured to calculate spatial coordinates of two bottom corner points of the two-dimensional frame in a three-dimensional coordinate system.

The three-dimensional information calculating unit 13 is configured to calculate three-dimensional information of the target according to the priori size of the target and the spatial coordinates of the two bottom corner points.

With the aforementioned apparatus, three-dimensional information of the target can be determined by only using an existing 2D detection algorithm (an existing detection algorithm and ranging algorithm) and the parameter of the monocular camera. Compared with the existing deep learning algorithm, the method provided in embodiments of the present disclosure does not need to provide a size information label corresponding to an object, thus reducing the workload of early model training.

In a specific application, the three-dimensional information includes an estimated length and an estimated width. The priori size includes a priori length and a priori width. The spatial coordinates of the two bottom corner points in the three-dimensional coordinate system include length direction coordinates and width direction coordinates. The three-dimensional information calculating unit 13 includes a reference calculating subunit and a scale coefficient calculating subunit.

The scale coefficient calculating subunit is configured to calculate a first scale coefficient according to the priori length, the priori width, the length direction coordinates and the width direction coordinates of the two bottom corner points in a case where the target is located in a side area in a width direction of the monocular image.

The size estimating unit is configured to calculate the estimated length according to the first scale coefficient and the priori length, and calculate the estimated width according to the first scale coefficient and the priori width.

Specifically, the scale coefficient calculating subunit may be configured to calculate a reference size according to the length direction coordinates and the width direction coordinates of the two bottom corner points, the priori length and the priori width, and an external parameter of the monocular camera forming the monocular image, as well as the priori length and the priori width.

In an application, the external parameter includes a yaw angle. The reference size is calculated by the following formula:

$$view\_width = cwidth \times \sin|yaw| \times left\_bottom\_x / left\_bottom\_y + cwidth \times \cos|yaw| +$$
$$cdept \times \sin|yaw| + clength \times \cos|yaw| \times right\_bottom\_x / right\_bottom\_y$$

where the *view_width* represents the reference size, the *cwidth* represents the priori width, the *clength* represents the priori length, the *yaw* represents the yaw angle, the *left_bottom_x* and the *left_bottom_y* represent a length direction coordinate and a width direction coordinate of the bottom corner point on a left side; the *right_bottom_x* and the *right_bottom_y* represent a length direction coordinate and a width direction coordinate of the bottom corner point on a right side.

In practical applications, the three-dimensional information calculating unit 13 may be configured to take a difference of the width direction of the two bottom corner points as the estimated width in a case where the target is located in a middle area in a width direction of the monocular image; take the priori length as the estimated length; or calculate a second scale coefficient according to the estimated width and the priori width; and calculate the estimated length according to the second scale coefficient and the priori length.

In practical applications, the three-dimensional information also includes a projection area of the target on a reference plane; the reference plane is a plane determined by a length direction and a width direction of the three-dimensional coordinate system. The three-dimensional information calculating unit 13 is also configured to select a position reference point from the two bottom corner points according to a position of the two-dimensional frame in the monocular image; calculate length direction coordinates and width direction coordinates of four projection points of four sides of the target on the reference plane according to a length direction coordinate and a width direction coordinate of the position reference point, the estimated length and the estimated width, and determine the projection area of the target on the reference plane according to the length direction coordinates and the width direction coordinates of the four projection points. Specifically, it also needs to calculate the length direction coordinates and the width direction coordinates of the four projection points according to the external parameter of the monocular camera forming the monocular image. The external parameter includes at least one of the yaw angle, a pitch angle and a roll angle.

In an application, the three-dimensional information further includes a spatial area range of the target in the three-dimensional coordinate system. The three-dimensional information calculating unit 13 is further configured to calculate height direction coordinates of the four projection points according to a height coordinate of the position reference point; determine a length direction coordinate, a width direction coordinate and a height direction coordinate of a vertex of the target according to the estimated height, and the length direction coordinates, the width direction coordinates and the height direction coordinates of the four projection points; and determine the spatial area range according to the length direction coordinate, the width direction coordinate, and the height direction coordinate of the vertex.

Embodiments of the present disclosure also provide an electronic device for implementing a target detection method based on a monocular image.

FIG. 7 is a schematic diagram showing an electronic device provided in an embodiment of the present disclosure. The electronic device can calculate three-dimensional information of an object.

As shown in FIG. 7, the electronic device includes at least one processor 21, at least one memory 22, and at least one communication interface 23. Various components in the electronic device are coupled together by a bus system 24. The communication interface 23 is configured for information transmission with an external device. Understandably, the bus system 24 is configured to implement connection communication between these components. The bus system 34 includes a power bus, a control bus and a status signal bus in addition to a data bus. However, for the sake of clarity, various buses are marked as the bus system 24 in FIG. 7.

It is understood that the memory 22 in embodiments of the present disclosure may be a volatile memory, or a non-volatile memory, or may include both volatile and non-volatile memories.

In some embodiments, the memory 22 stores the following elements: executable units, or data structures, or subsets thereof, or extended sets thereof: operating systems and application programs.

The operating system includes various system programs, such as a framework layer, a core library layer, a driver layer, etc., for implementing various basic tasks and processing hardware-based tasks. The application programs include various application programs, such as a media player, a browser, etc., which are used to implement various application tasks. A program for implementing the target detection method based on the monocular image provided in embodiments of the present disclosure may be included in the application programs.

In embodiments of the present disclosure, the processor 21 is configured to execute steps of the target detection method based on the monocular image provided in the present disclosure by calling a program or an instruction stored in the memory 22, specifically, a program or an instruction stored in an application program.

The processor 31 may be an integrated circuit chip with signal processing capability. In an implementation process, each step of the above-mentioned method may be completed by a hardware integrated logic circuit in the processor 21, or an instruction in the form of software. The above-mentioned processor 21 may be a generic processor, a digital signal processor (DSP), an application specific integrated circuit (ASIC), a field programmable gate array (FPGA), or other programmable logic devices, discrete gate or transistor logic devices, and discrete hardware components. A generic processor may be a microprocessor, or the processor may be any conventional processor or the like.

The steps of the target detection method based on the monocular image provided in embodiments of the present disclosure may be directly embodied as being executed and completed by a hardware decoding processor, or by a combination of hardware and software units in the decoding processor. The software unit may be located in a random access memory, a flash memory, a read-only memory, a programmable read-only memory, or an electrically erasable programmable memory, a register and other mature storage media in the art. The storage medium is located in the memory 22, and the processor 21 reads information in the memory 22 and completes steps of the method in combination with its hardware.

An embodiment of the present disclosure also provides a non-transitory computer-readable storage medium having stored therein programs or instructions that, when executed by a computer, cause steps of the target detection method based on the monocular image as described in any embodiment hereinbefore to be implemented, which will not be elaborated here in order to avoid repetition of the description.

Embodiments of the present disclosure also provide an intelligent driving control system in addition to the aforementioned electronic device and storage medium. The intelligent driving control system is configured to detect a target on a road to determine the target on the road. The intelligent driving control system includes a monocular camera and a controller.

The monocular camera is configured to collect monocular images including road surface information. In embodiments of the present disclosure, an installation position of the monocular camera is not particularly limited. The monocular camera needs to be calibrated to determine various external parameters thereof according to different installation positions and application modes of the monocular camera.

The controller is configured to execute the steps of the target detection method based on the monocular camera provided in the aforementioned embodiments, and acquire three-dimensional information of the target in the monocular image to realize the recognition of road condition. In a specific application, the controller may be various types of controllers, which are not particularly limited in embodiments of the present disclosure. For example, the controller may be used as a DSP chip or an FPGA chip of a lower computer, and as a CPU processing chip of an upper computer.

In addition to the aforementioned monocular camera and the controller, the intelligent driving control system may further include a memory, and a bus interface configured to realize a connection between the memory, the monocular camera and the controller. The memory may be configured to store the aforementioned external parameter for calibrating the monocular camera, and may also be configured to store the monocular image captured by the monocular camera, and store results generated by the controller after processing the monocular image.

On the basis of the aforementioned embodiments, an embodiment of the present disclosure further provides a vehicle. The vehicle includes the aforementioned intelligent driving control system. It is to be noted that the vehicle mentioned in embodiments of the present disclosure may be a motor vehicle with more than four wheels such as a car, or a motorcycle with two or three wheels. In some applications, the vehicle may also be such as a balance car.

In practical applications, the monocular camera in the intelligent driving control system may be installed on the front side of the vehicle to capture the road conditions in front of the vehicle and form monocular images. For example, the monocular camera may be installed on a front grille or a bumper of the vehicle, or on an upper part of a windshield of a cockpit of the vehicle. The intelligent driving control system may also be installed at a rear of the vehicle, to capture the road conditions behind the vehicle and form the monocular image. The monocular camera can also be installed on a helmet of a driver in the case where the vehicle is a motorcycle.

A processor in the intelligent driving control system may directly be a vehicle control processor of the vehicle in the case where the intelligent driving control system is installed in the vehicle.

The vehicle in embodiments of the present disclosure further includes subsystems such as a vehicle frame, a suspension system, a power system, a transmission system, and a steering system that perform corresponding functions, in addition to the aforementioned intelligent driving control system, which will not be elaborated herein.

It is to be noted that relational terms used herein such as "first", "second", and the like are used merely to distinguish one entity or operation from another entity or operation, without necessarily requiring or implying any actual such relationship or order between these entities or operations herein. Furthermore, the terms "comprise", "include", or any other variations thereof, are intended to cover a non-exclusive inclusion, such that a process, a method, an article, or an apparatus that includes a list of elements does include not only those elements but may include other elements not expressly listed or inherent to the process, the method, the article, or the apparatus. An element defined by "including a..." does not, without more constraints, preclude the existence of additional identical elements in the process, the method, the article, or the apparatus that includes the element.

The above descriptions only involve specific embodiments of the present disclosure to enable those skilled in the art to understand or implement the present disclosure. Various modifications to these embodiments can be made by those skilled in the art, and the generic principles defined herein may be implemented in other embodiments without departing from the spirit or scope of the present disclosure. Therefore, the present disclosure is not intended to be limited to the embodiments described herein, but is to be in accordance with the widest scope consistent with the principles and novel features disclosed herein.

**Claims**

1. A target detection method based on a monocular image, comprising:

   acquiring the monocular image;
   determining a two-dimensional frame of a target in the monocular image and a priori size of the target, the priori size being a preset size determined according to the target;
   calculating spatial coordinates of two bottom corner points of the two-dimensional frame in a three-dimensional coordinate system; and
   calculating three-dimensional information of the target according to the priori size of the target and the spatial coordinates of the two bottom corner points.

2. The method of claim 1, wherein the three-dimensional information comprises an estimated length and an estimated width; the priori size comprises a priori length and a priori width; the spatial coordinates of the two bottom corner points in the three-dimensional coordinate system comprise length direction coordinates and width direction coordinates;
   calculating the three-dimensional information of the target according to the priori size of the target and the spatial coordinates of the two bottom corner points comprises:
   calculating the estimated length and the estimated width according to the priori length and the priori width, and the length direction coordinates and the width direction coordinates of the two bottom corner points.

3. The method of claim 2, wherein calculating the estimated length and the estimated width according to the priori length and the priori width, and the length direction coordinates and the width direction coordinates of the two bottom corner points comprises:

   calculating a first scale coefficient according to the priori length, the priori width, the length direction coordinates and the width direction coordinates of the two bottom corner points in a case where the target is located in a side area in a width direction of the monocular image; and
   calculating the estimated length according to the first scale coefficient and the priori length, and calculating the estimated width according to the first scale coefficient and the priori width.

4. The method of claim 3, wherein calculating the first scale coefficient according to the priori length, the priori width, the length direction coordinates and the width direction coordinates of the two bottom corner points comprises:

   calculating a reference size according to the length direction coordinates and the width direction coordinates of the two bottom corner points, the priori length and the priori width; and
   calculating a difference of the width direction coordinates of the two bottom corner points; and taking a ratio of the difference and the reference size as the first scale coefficient.

5. The method of claim 4, wherein calculating the reference size according to the length direction coordinates and the width direction coordinates of the two bottom corner points, the priori length and the priori width comprises:

   calculating the reference size according to the length direction coordinates and the width direction coordinates of the two bottom corner points, the priori length, the priori width, and an external parameter of a monocular camera forming the monocular image;
   the external parameter comprising a yaw angle; the reference size being calculated by a formula:

$$Reference size = x \times sin\,|\,yaw\,| \times \frac{leftx}{lefty} + x \times cos\,|\,yaw\,| + y \times sin\,|\,yaw\,| + y \times cos\,|\,yaw\,| \times \frac{rightx}{righty},$$

   where *Referencesize* represents the reference size, *x* represents the priori width, *y* represents the priori length, *yaw* represents the yaw angle, and *leftx* and *lefty* represent a length direction coordinate and a width direction coordinate of a bottom corner point on a left side, respectively; and *rightx* and *righty* represent a length direction coordinate and a width direction coordinate of a bottom corner point on a right side, respectively.

6. The method of claim 2, wherein calculating the estimated length and the estimated width of the target according to the priori size of the target and the length direction coordinates and the width direction coordinates of the two bottom corner points comprises:

   taking a difference of the width direction of the two bottom corner points as the estimated width in a case where the target is located in a middle area in a width direction of the monocular image;
   taking the priori length as the estimated length; or
   taking a ratio of the estimated width and the priori width as a second scale coefficient; and calculating the estimated length according to the second scale coefficient and the priori length.

7. The method of any one of claims 2 to 6, wherein the three-dimensional information further comprises a projection area of the target on a reference plane; the reference plane is a plane determined by a length direction and a width direction of the three-dimensional coordinate system; and the method further comprises:

   selecting a position reference point from the two bottom corner points of the two-dimensional frame;
   calculating length direction coordinates and width direction coordinates of four projection points of four sides of the target on the reference plane according to a length direction coordinate and a width direction coordinate of the position reference point, the estimated length and the estimated width; and
   determining the projection area of the target on the reference plane according to the length direction coordinates and the width direction coordinates of the four projection points.

8. The method of claim 7, wherein calculating the length direction coordinates and the width direction coordinates of the four projection points of the four sides of the target on the reference plane according to the length direction coordinate and the width direction coordinate of the position reference point, the estimated length and the estimated width of the target comprises:

   calculating the length direction coordinates and the width direction coordinates of the four projection points according to the length direction coordinate and the width direction coordinate of the position reference point, the estimated length, the estimated width, and an external parameter of a monocular camera forming the monocular image;
   the external parameter comprising at least one of a yaw angle, a pitch angle and a roll angle.

9. The method of claim 8, wherein the three-dimensional information further comprises an estimated height, and the method further comprises:

   taking a ratio of a width and a height of the two-dimensional frame as a third scale coefficient; and
   calculating the estimated height according to the third scale coefficient and the estimated width.

10. The method of claim 9, wherein the three-dimensional information further comprises a spatial area range of the target in the three-dimensional coordinate system; and the method further comprises:

   calculating height direction coordinates of the four projection points according to a height coordinate of the position reference point;
   determining a length direction coordinate, a width direction coordinate and a height direction coordinate of a vertex of the target according to the estimated height, and the length direction coordinates, the width direction coordinates and the height direction coordinates of the four projection points; and
   determining the spatial area range according to the length direction coordinate, the width direction coordinate, and the height direction coordinate of the vertex.

11. The method of claim 10, further comprising:

   displaying the spatial area range in the monocular image; and/or
   displaying the estimated length, the estimated width, and the estimated height in the monocular image.

12. A target detection apparatus based on a monocular image, configured to calculate three-dimensional information of a target in the monocular image; comprising:

a target determining unit configured to acquire the monocular image and determine a two-dimensional frame of the target in the monocular image and a priori size of the target, the priori size being a preset size determined according to the target;
a corner point coordinate calculating unit configured to calculate spatial coordinates of two bottom corner points of the two-dimensional frame in a three-dimensional coordinate system; and
a three-dimensional information calculating unit configured to calculate the three-dimensional information of the target according to the priori size of the target and the spatial coordinates of the two bottom corner points.

13. The apparatus of claim 12, wherein the three-dimensional information comprises an estimated length and an estimated width; the priori size comprises a priori length and a priori width; the spatial coordinates of the two bottom corner points in the three-dimensional coordinate system comprise length direction coordinates and width direction coordinates; the three-dimensional information calculating unit comprises:

a scale coefficient calculating subunit configured to calculate a first scale coefficient according to the priori length, the priori width, the length direction coordinates and the width direction coordinates of the two bottom corner points in a case where the target is located in a side area in a width direction of the monocular image; and
a size estimating unit configured to calculate the estimated length according to the first scale coefficient and the priori length, and calculate the estimated width according to the first scale coefficient and the priori width.

14. An intelligent driving control system, comprising:

a monocular camera configured to collect a monocular image; and
a controller configured to process the monocular image by the steps of the method of any one of claims 1 to 11, to acquire three-dimensional information of a target in the monocular image to implement road condition recognition.

15. A vehicle comprising the intelligent driving control system of claim 14.

acquiring a monocular image , determining a type of a target in the monocular image and a two-dimensional frame of the target in the monocular image , and determining a prior size of the target based on the type $\quad$ S101

calculating spatial coordinates of two bottom corner points of the two-dimensional frame in a three -dimensional coordinate system $\quad$ S102

calculating three -dimensional information of the target according to the priori size of the target and the spatial coordinates of the two bottom corner points $\quad$ S103

FIG. 1

FIG. 2

determining whether the target
is located in a middle area in a width direction of ⌐S201
the monocular image

no

calculating a first scale coefficient according to the priori length, the priori
width, the length direction coordinates and the width direction coordinates ⌐S202
of the two bottom corner points

calculating the estimated length according to the first scale coefficient and
the priori length, and calculating the estimated width according to the first ⌐S203
scale coefficient and the priori width

yes

taking a difference of the width direction coordinates of the two bottom
corner points as the estimated width, and taking the priori length as the ⌐S204
estimated length

FIG. 3

calculating a third scale coefficient according to the difference of the width
direction coordinates of the two bottom corner points and the width of the ⌐S301
two-dimensional frame

calculating the estimated height of the object according to the third scale ⌐S302
coefficient and the height of the two-dimensional frame

FIG. 4

selecting at least one of the two bottom corner points as a position
reference point according to the position of the two-dimensional ⌐S401
frame in the monocular image

calculating length direction coordinates and width direction
coordinates of four projection points of four sides of the target on the
reference plane according to a length direction coordinate and a width ⌐S402
direction coordinate of the position reference point, the estimated
length and the estimated width

determining the projection area of the target on the reference
plane according to the length direction coordinates and the width ⌐S403
direction coordinates of the four projection points

FIG. 5

11

12

13

| image identifying unit | corner point coordinate calculating unit | three-dimensional information calculating unit |

FIG. 6

21

processor

22

24

memory

23

communication interface

FIG. 7

## INTERNATIONAL SEARCH REPORT

International application No.

**PCT/CN2021/117635**

| A. | CLASSIFICATION OF SUBJECT MATTER |
|---|---|

G06K 9/00(2006.01)i

According to International Patent Classification (IPC) or to both national classification and IPC

| B. | FIELDS SEARCHED |
|---|---|

Minimum documentation searched (classification system followed by classification symbols)

G06K G06N

Documentation searched other than minimum documentation to the extent that such documents are included in the fields searched

Electronic data base consulted during the international search (name of data base and, where practicable, search terms used)

CNPAT, CNKI, WPI, EPODOC: 单目, 二维, 三维, 框, 检测, 识别, 重建, 侧, 后面, 背面, 不同, 投影, 比例, 先验, 实际, 真实, 尺寸, 大小, monocular, 2D, 3D, two dimension, three dimension, back, side, ratio, real, size, detect, recognize, reconstruct+

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 112183241 A (BEIJING LUOKEWEIERSI TECHNOLOGY CO., LTD.) 05 January 2021 (2021-01-05)<br>claims 1-15 | 1-15 |
| X | CN 110517349 A (UNIVERSITY OF ELECTRONIC SCIENCE AND TECHNOLOGY OF CHINA) 29 November 2019 (2019-11-29)<br>description, paragraphs 0003-0038 | 1-2,12,14-15 |
| A | CN 110969064 A (NAVINFO CO., LTD.) 07 April 2020 (2020-04-07)<br>entire document | 1-15 |
| A | CN 110826499 A (SHANGHAI EYE CONTROL TECHNOLOGY CO., LTD.) 21 February 2020 (2020-02-21)<br>entire document | 1-15 |
| A | US 2020082553 A1 (BAIDU ONLINE NETWORK TECHNOLOGY BEIJING CO., LTD.) 12 March 2020 (2020-03-12)<br>entire document | 1-15 |

☑ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **18 November 2021** | **08 December 2021** |

| Name and mailing address of the ISA/CN | Authorized officer |
|---|---|
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

## INTERNATIONAL SEARCH REPORT

<table>
<tr><td colspan="2"></td><td>International application No.</td></tr>
<tr><td colspan="2"></td><td>**PCT/CN2021/117635**</td></tr>
</table>

**C.     DOCUMENTS CONSIDERED TO BE RELEVANT**

| Category* | Citation of document, with indication, where appropriate, of the relevant passages | Relevant to claim No. |
|---|---|---|
| A | 张峻宁 等 (ZHANG, Junning et al.). "一种基于透视投影的单目3D 目标检测网络 (A Monocular 3D Target Detection Network with Perspective Projection)" 机器人 *(Robot)*, Vol. 42, No. 3, 31 May 2020 (2020-05-31), pp. 278-288 | 1-15 |

Form PCT/ISA/210 (second sheet) (January 2015)

INTERNATIONAL SEARCH REPORT
Information on patent family members

International application No.

**PCT/CN2021/117635**

| Patent document cited in search report | | | Publication date (day/month/year) | Patent family member(s) | | | Publication date (day/month/year) |
|---|---|---|---|---|---|---|---|
| CN | 112183241 | A | 05 January 2021 | None | | | |
| CN | 110517349 | A | 29 November 2019 | None | | | |
| CN | 110969064 | A | 07 April 2020 | None | | | |
| CN | 110826499 | A | 21 February 2020 | None | | | |
| US | 2020082553 | A1 | 12 March 2020 | US | 11024045 | B2 | 01 June 2021 |
| | | | | JP | 2020042818 | A | 19 March 2020 |
| | | | | JP | 6830139 | B2 | 17 February 2021 |
| | | | | CN | 109242903 | A | 18 January 2019 |
| | | | | EP | 3621036 | A1 | 11 March 2020 |

Form PCT/ISA/210 (patent family annex) (January 2015)

**REFERENCES CITED IN THE DESCRIPTION**

**Patent documents cited in the description**

- CN 202010955213